(19) Europäisches Patentamt

European Patent Office

Office européen des brevets

(11) **EP 0 624 996 B1**

(12) **FASCICULE DE BREVET EUROPEEN**

(45) Date de publication et mention
de la délivrance du brevet:
**19.01.2000 Bulletin 2000/03**

(51) Int. Cl.⁷: **H04Q 7/38**

(21) Numéro de dépôt: **94400960.4**

(22) Date de dépôt: **03.05.1994**

(54) **Procédé radiotéléphonique de localisation d'abonnés mobiles et installation radiotéléphonique pour la mise en oeuvre dudit procédé**

Funktelefonverfahren zur Lokalisierung von mobilen Teilnehmern und dafür geeignete Funktelefonanlage

Radiotelephone method of mobile subscriber localisation and radiotelephone therefor

(84) Etats contractants désignés:
**DE GB**

(30) Priorité: **11.05.1993 FR 9305659**

(43) Date de publication de la demande:
**17.11.1994 Bulletin 1994/46**

(73) Titulaire: **FRANCE TELECOM**
**75015 Paris (FR)**

(72) Inventeur: **Tabbane, Sami**
**F-75014 Paris (FR)**

(74) Mandataire:
**Plaçais, Jean-Yves et al**
**Cabinet Netter,**
**40, rue Vignon**
**75009 Paris (FR)**

(56) Documents cités:
**EP-A- 0 454 648**

• **PATENT ABSTRACTS OF JAPAN vol. 12, no. 196 (E-618) & JP-A-62 299 123 (NEC)**
• **PATENT ABSTRACTS OF JAPAN vol. 015, no. 343 (E-1106) 30 Août 1991 & JP-A-31 031 131 (NTT)**
• **ECHO DE RECHERCHES., no.131, 1988, ISSY-LES-MOULINEAUX FR pages 5 - 16 GHILLEBAERT 'Le système cellulaire numérique européen de communication avec les mobiles'**

**Description**

La présente invention se rapporte au domaine de la radiotéléphonie.

Elle trouve une application générale dans la localisation d'abonnés mobiles dans une installation radiotéléphonique, et plus particulièrement dans une installation radiotéléphonique du type GSM (Groupe Spécial Mobiles).

D'une façon générale, un procédé radiotéléphonique de localisation d'abonnés mobiles comprend les étapes suivantes :

a) prévoir au moins un poste téléphonique mobile pour un abonné mobile prédéterminé possédant une identité d'abonné mobile prédéterminée, ledit poste téléphonique mobile étant destiné à être en intercommunication avec des postes téléphoniques fixes raccordés à un réseau de communication téléphonique fixe ;

b) prévoir une pluralité de zones géographiques de localisation, chacune couverte radioélectriquement par au moins une station de base, chaque zone de localisation ayant une identité prédéterminée ;

c) prévoir des moyens d'enregistrement reliés aux stations de base et contenant des informations relatives à l'identité de l'abonné et à l'identité de la zone de localisation courante du poste téléphonique mobile ;

d) au niveau des moyens d'enregistrement, créer un profil pour l'abonné mobile constitué d'une liste de couplets (Zi, fi) où Zi est une identité de zone de localisation et fi représente une fonction à au moins un opérande prédéterminé donnant la probabilité de localiser l'abonné dans la zone de localisation Zi à un instant donné et stocker ledit profil ainsi créé dans les moyens d'enregistrement ;

e) après stockage du profil, en réponse à une demande d'appel téléphonique à destination de l'abonné mobile, interroger les moyens d'enregistrement pour sélectionner dans le profil selon l'opérande au moins l'identité de zone de localisation affectée de la plus forte probabilité et diffuser un message de recherche dans la zone de localisation dans l'identité est ainsi sélectionnée ;

f) en cas de localisation positive, au niveau du poste téléphonique mobile, recevoir le message de recherche et établir en réponse l'intercommunication radiotéléphonique avec le demandeur, tandis qu'en cas de localisation négative, diffuser le message de recherche dans une autre zone de localisation, le cas échéant (EP-A-0 454 648; JP-A-62 299 123 ; JP-A-31 31 131).

Le Demandeur s'est posé le problème de créer un tel profil de manière peu onéreuse et facile.

Ce but est atteint à partir d'un procédé du type mentionné ci-avant, qui est caractérisé par le fait qu'il est prévu de créer le profil à partir d'informations enregistrées dans les moyens d'enregistrement, sous la forme d'un premier fichier de travail et obtenues au cours des déplacements d'un abonné particulier pendant une première durée d'observation prédéterminée, lesdites informations étant relatives à une pluralité de périodes chronologiques quotidiennes s'étalant sur la première durée d'observation et ayant chacune un début déterminé par l'heure à laquelle l'abonné mobile est entré dans une zone de localisation d'identité quotidienne particulière, et une fin est déterminée par l'heure à laquelle ledit abonné mobile est sorti de la zone de localisation d'identité quotidienne particulière et est entré dans une autre zone de localisation.

En pratique, il est prévu d'exécuter un algorithme de traitement des informations contenues dans le premier fichier de travail comprenant les étapes suivantes:

- i) construire, à partir des heures de début et de fin des différentes périodes chronologiques quotidiennes du premier fichier de travail, une liste de périodes chronologiques hebdomadaires successives, la première période chronologique hebdomadaire ayant un début de valeur supérieure ou égale à 0h00' et une fin correspondant à la fin de la période chronologique quotidienne ayant la plus petite valeur parmi celles des heures de fin des périodes chronologiques quotidiennes du premier fichier de travail, et la dernière période chronologique hebdomadaire ayant une fin de valeur inférieure ou égale à 23h59'et un début correspondant au début de la période chronologique quotidienne ayant la plus grande valeur parmi celles des heures de début des périodes chronologiques quotidiennes du premier fichier de travail, à chaque période chronologique hebdomadaire étant affectée l'identité quotidienne de la zone de localisation de la période chronologique quotidienne correspondante ;

- ii) en parcourant les informations du premier fichier de travail, saisir les différentes identités quotidiennes de zone de localisation affectées pour chaque période chronologique hebdomadaire ainsi construite ;

- iii) compter la récurrence de chaque identité quotidienne de zone de localisation pour chaque période chronologique hebdomadaire ; et

- iv) ordonner les différentes identités quotidiennes de zones de localisation selon leur récurrence pour chaque période chronologique hebdomadaire.

Avantageusement, le procédé comprend en outre les étapes suivantes:

- construire, en mode de fonctionnement du poste téléphonique mobile, un second fichier de travail, sensiblement similaire au premier fichier de travail, et contenant des informations relatives aux périodes chronologiques quotidiennes et aux identités quotidiennes de zones de localisation enregistrées dans les moyens d'enregistrement pendant une seconde durée prédéterminée qui suit la première durée d'observation et non enregistrées dans le premier fichier de travail pendant ladite première durée d'observation ; et

- traiter ces nouvelles informations conformément aux étapes i à iv pour mettre à jour le profil.

La présente invention a également pour objet une installation radiotéléphonique pour la mise en oeuvre du procédé selon l'invention.

D'autres caractéristiques et avantages de l'invention apparaîtront à la lumière de la description détaillée ci-après et des dessins annexés dans lesquels :

- la figure 1 représente schématiquement une installation radiotéléphonique du type GSM ;

- la figure 2 est un tableau illustrant la construction d'un exemple de fichier de travail selon l'invention ;

- la figure 3 est un organigramme illustrant l'étape relative à la construction des différentes périodes chronologiques selon l'invention ;

- les figures 4A, 4B, 4C, et 4D sont des tableaux illustrant les étapes de la création du profil à partir du fichier de travail de la figure 2 selon l'invention ;

- les figures 5A, et 5B, illustrent un exemple de mise à jour du profil selon l'invention ; et

- la figure 6 est un organigramme illustrant le procédé de localisation des abonnés mobiles selon l'invention dans une installation du type GSM.

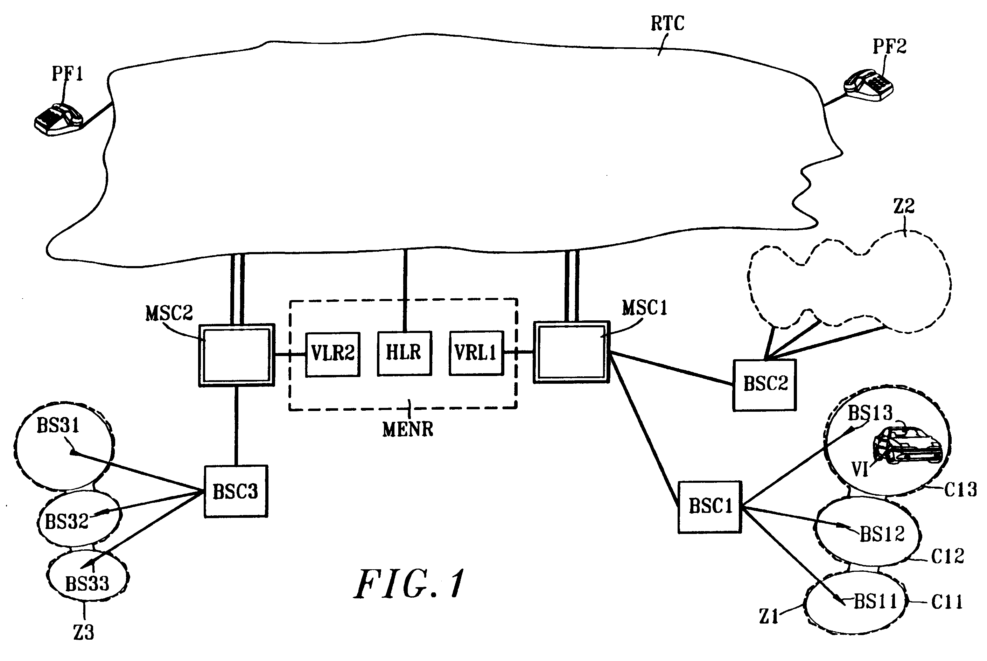

Sur la figure 1, on a représenté une architecture d'une installation radiotéléphonique selon l'invention par exemple, du type GSM (Groupe Spécial Mobiles).

Elle est articulée autour d'un poste téléphonique mobile MS destiné à être en intercommunication avec des postes téléphoniques fixes PF1, PF2 raccordés à un réseau de communication téléphonique fixe RTC, par exemple le réseau téléphonique commuté public.

Dans une installation du type GSM, le poste téléphonique mobile MS, ici logé dans un véhicule VI, est attribué à un abonné mobile possédant une identité internationale d'abonné mobile appelée IMSI pour "International Mobile Subscriber Identity".

La zone de couverture radioélectrique de l'installation est partitionnée en une pluralité de zones de localisation Z1, Z2, Z3, chacune couverte radioélectriquement par une pluralité de stations de base, BS11 à BS13 pour la zone de localisation Z1, BS21 à BS23 pour la zone Z2 et BS31 à BS33 pour la zone de localisation Z3.

L'installation radiotéléphonique est dite cellulaire dans la mesure où à chaque station de base BS est attribuée une cellule radioélectrique, par exemple C11 pour la station de base C11, C12 pour la station de base BS12 et C13 pour la station de base BS13. La juxtaposition des cellules C11 à C13 constitue ici la zone de localisation Z1.

En pratique, à chaque zone de localisation est affectée une identité de zone de localisation Za avec a nombre entier variant de 1 à a et où a est le nombre de zone de localisation. Cette identité est émise périodiquement sur un canal prédéterminé par toutes les stations de base situées dans la zone de localisation correspondante.

Il est à remarquer qu'à une zone de localisation, il est associé une ou plusieurs stations de base.

Des moyens d'enregistrement MENR sont reliés aux pluralités de stations de base BS via des moyens d'acheminement MACH que l'on décrira plus en détail ci-après.

Les moyens d'enregistrement MENR contiennent des informations relatives notamment à l'identité de l'abonné IMSI et à l'identité de la zone de localisation courante, ici Z1 pour le poste mobile MS.

Les moyens d'acheminement MACH sont reliés aux pluralités de stations de base BS, au réseau de communication téléphonique fixe RTC et aux moyens d'enregistrement MENR.

Ils comprennent des moyens d'interrogation (non représentés) propres, en réponse à une demande d'appel téléphonique à destination de l'abonné mobile (appel entrant), à interroger les moyens d'enregistrement pour saisir l'identité de la zone de localisation courante de l'abonné ainsi demandé et des moyens de diffusion (non représentés) propres à diffuser un message de recherche dans chacune des stations de base dans ladite zone de localisation dont l'identité est ainsi saisie.

En cas de localisation positive dans ladite zone de localisation, c'est-à-dire dans le cas où le poste mobile MS se trouve dans la zone de localisation dont l'identité est ainsi saisie, le poste téléphonique mobile reçoit le message d'avis de recherche et établit en réponse l'intercommunication radiotéléphonique avec le demandeur.

La structure détaillée des moyens d'acheminement MACH est décrite dans la revue l'ECHO DES RECHERCHES No 131, 1er trimestre 1988 "Le système cellulaire numérique européen de communication avec les mobiles".

Pour l'essentiel, ces moyens d'acheminement MACH comprennent :

- une pluralité de contrôleurs de stations de base BSC1 à BSC3 reliés chacun à une pluralité de stations de base d'une zone de localisation prédéterminée par exemple le contrôleur BSC1 est relié aux stations de base BS11, BS12 et BS13 de la zone de localisation Z1 ;

- une pluralité de centres de commutation du service mobile MSC1, MSC2, reliés chacun au réseau de communication téléphonique fixe RTC d'une part et à une pluralité de contrôleurs BSC d'autre part.

Par exemple, le centre de commutation du service mobile MSC1 gère les contrôleurs BSC1 et BSC2 tandis que le centre de commutation du service mobile MSC2 gère le contrôleur BSC3.

En bref, un contrôleur de station de base BSC assure la commande d'une ou plusieurs stations de base BS et joue le rôle de passerelle entre les stations de base BS et le centre de commutation du service mobile MCS.

Un centre de commutation du service mobile MCS assure, quant à lui, l'interfonctionnement de l'installation radioélectrique cellulaire avec le réseau de communication téléphonique fixe RTC.

Dans une installation du type GSM, les moyens d'enregistrement comprennent un enregistreur de localisation nominale appelé HLR pour "Home Location Register" et une pluralité d'enregistreurs de localisation des visiteurs appelé VLR pour "Visitors Location Register" associés chacun à un ou plusieurs centres de commutation du service mobile.

L'enregistreur de localisation des visiteurs VLR1 est ici associé au centre de commutation du service mobile MSC1 tandis que l'enregistreur de localisation des visiteurs VLR2 est associé au centre de commutation du service mobile MSC2.

En bref, l'enregistreur de localisation nominale HLR est une base de données qui contient les informations nécessaires à la gestion des communications téléphoniques d'un certain nombre d'abonnés mobiles.

Pour l'essentiel, ces informations sont l'identité de l'abonné IMSI, son numéro d'annuaire, les services de base et les services supplémentaires auxquels il a droit, les restrictions de services éventuelles, etc.

Ces informations sont mises à jour au gré des changements des caractéristiques d'abonnement. Elles sont donc quasi-statiques.

La base de données contient également une partie dynamique qui correspond à une information de localisation (identité de zone de localisation courante) pour chacun des abonnés mobiles concernés, information nécessaire à l'acheminement des communications d'arrivée vers ces abonnés (appels entrants). Cette information est gérée sous la forme d'un numéro de réacheminement par l'enregistreur de localisation des visiteurs courant.

Un enregistreur de localisation des visiteurs VLR contient une copie des enregistrements de l'enregistreur de localisation nominale pour tous les abonnés mobiles qui se trouvent dans les cellules dépendant de ses centres de commutation MSC.

Par exemple, l'enregistreur de localisation des visiteurs VLR1 contient une copie d'une partie des enregistrements du HLR pour tous les abonnés mobiles qui se trouvent dans les cellules dépendant du centre de commutation MSC1.

Ainsi, l'enregistreur de localisation des visiteurs VLR1, sur requête de l'enregistreur de localisation nominal HLR, fournit au centre de commutation du service mobile MSC1 les informations correspondantes lors du traitement des appels de départ et d'arrivée de ces abonnés.

L'enregistreur de localisation des visiteurs VLR contient également, pour tous ses abonnés, une information de localisation sous la forme d'une identité de la zone de localisation dans laquelle il se trouve.

Enfin, l'enregistreur de localisation des visiteurs VLR est le composant fonctionnel qui alloue les numéros de réacheminement et les transmet à l'enregistreur de localisation nominale HLR.

Par ailleurs, il est prévu de créer au niveau des moyens d'enregistrement, un profil pour chaque abonné mobile constitué d'une liste de couplets (Zi, fi) où Zi est une identité de zone de localisation et fi représente une fonction à au moins un opérande prédéterminé donnant la probabilité de localiser l'abonné dans la zone de localisation Zi à un instant donné et de stocker ledit profil ainsi créé dans les moyens d'enregistrement.

Après stockage du profil, en réponse à une demande d'appel téléphonique à destination de l'abonné mobile, il est prévu d'interroger les moyens d'enregistrement pour sélectionner dans le profil selon l'opérande prédéterminé au moins l'identité de la zone de localisation ayant la plus forte probabilité et de diffuser le message de recherche dans la zone de localisation ainsi sélectionnée.

En cas de localisation positive, il est prévu, au niveau du poste téléphonique mobile, de recevoir le message de recherche et d'établir en réponse l'intercommunication radiotéléphonique avec le demandeur, tandis qu'en cas de localisation négative, il est prévu de diffuser le message de recherche dans une autre zone de localisation le cas échéant.

La création du profil s'appuie sur la procédure connue dans laquelle en cas de changement de zone de localisation, le poste téléphonique mobile se signale auprès de la station de base correspondante en lui communiquant l'identité de l'abonné, tandis que la nouvelle zone de localisation ainsi signalée est enregistrée dans les moyens d'enregistrement en association avec l'identité de l'abonné mobile et la date à laquelle s'effectue le changement de zone de localisation.

Selon l'invention, il est prévu de créer le profil à partir d'informations enregistrées dans les moyens d'enregistrement sous la forme d'un fichier de travail STAT et obtenues au cours des déplacements d'un abonné mobile particulier pendant une durée d'observation prédéterminée.

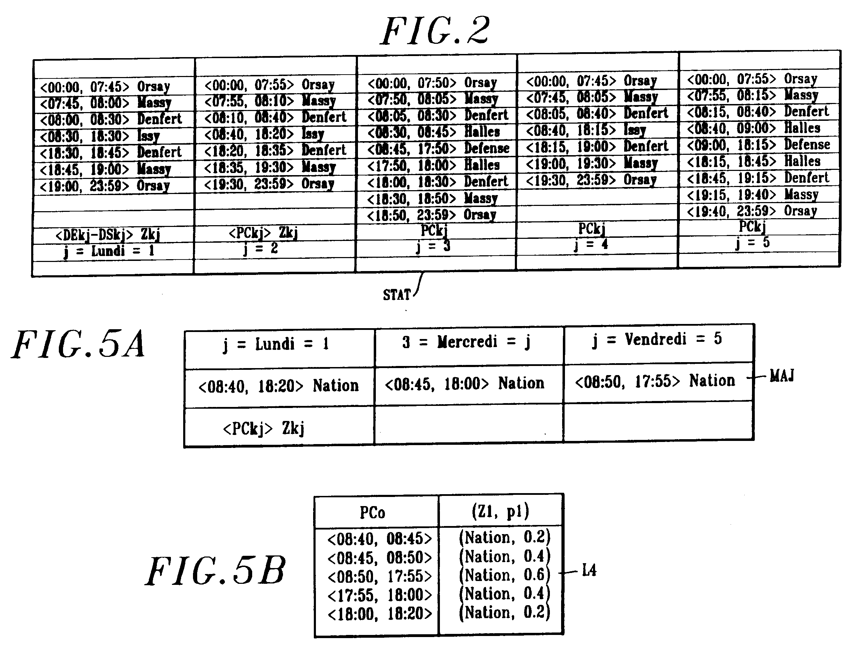

En réference à la figure 2, les informations contenues dans le fichier de travail STAT comprennent une pluralité de périodes chronologiques quotidiennes PCkj s'étalant sur la durée d'observation, par exemple sur 5 jours, avec k variable de $0^h00'$ à $23^h59'$ et j variable de 1 à 5 et initialisée à 1 pour lundi (j pourrait avoir une valeur différente, par exemple 31).

Chaque période chronologique quotidienne PCkj possède un début DEkj déterminé par l'heure à laquelle l'abonné mobile est entré dans une zone de localisation d'identité Z k-1j et une fin DSkj déterminée par l'heure à laquelle l'abonné mobile est sorti de la zone de localisation d'identité Zk-1j et est entré dans la zone de localisation d'identité Zkj.

Dans l'exemple illustré figure 2, l'abonné était lors de la période chronologique quotidienne PCkj <0h00', 7h45'> avec j=1=lundi et k=7h45' dans la zone de localisation d'identité Zkj = ORSAY, tandis que lors de la période chronologique quotidienne suivante PCk+1j <7h45', 8h00'>, avec j = 1 et k+1=8h , il était dans la zone de localisation d'identité Zk+1j = Massy .

Ensuite, il est prévu d'exécuter un algorithme de traitement des informations contenues dans le fichier de travail STAT comprenant les étapes suivantes:

- i) construire à partir des différentes périodes chronologiques quotidiennes PCkj du fichier de travail STAT une liste L1 de périodes chronologiques hebdomadaires successives PCo (ou mensuelles dans le cas où j est égal à 31) la première période chronologique hebdomadaire PCo ayant un début DEo de valeur supérieure ou égale à $0^h00'$ et une fin DSo correspondant à l'heure de fin DSkj de la période chronologique quotidienne PCkj ayant la plus petite valeur parmi celles des heures de fin des périodes chronologiques quotidiennes du premier fichier de travail STAT, et la dernière période chronologique hebdomadaire ayant une fin DSo de valeur inférieure ou égale à $23^h59'$ et un début DEo correspondant à l'heure du début DEkj de la période chronologique quotidienne PCkj ayant la plus grande valeur parmi les heures de début des périodes chronologiques quotidiennes du premier fichier de travail STAT, à chaque période chronologique hebdomadaire étant affectée l'identité quotidienne Zo de la zone de localisation de la période chronologique quotidienne correspondante PCkj ;

- ii) en parcourant le fichier de travail STAT, saisir les différentes identités quotidiennes de zone de localisation affectées pour chaque période chronologique hebdomadaire;

- iii) compter la récurrence de chaque identité quotidienne de zone de localisation pour chaque période chronologique hebdomadaire ainsi construite ; et

- iv) ordonner les différentes identités quotidiennes de zones de localisation selon leur récurrence pour chaque période chronologique hebdomadaire.

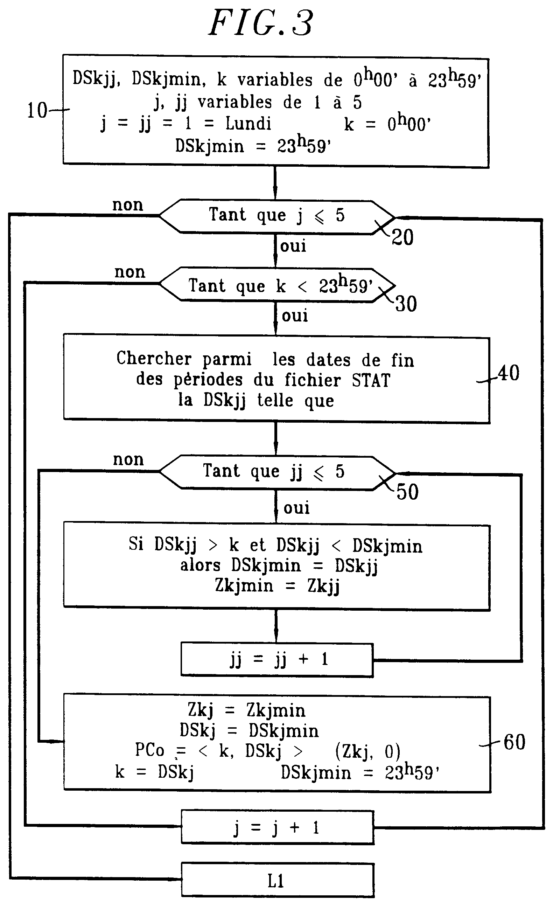

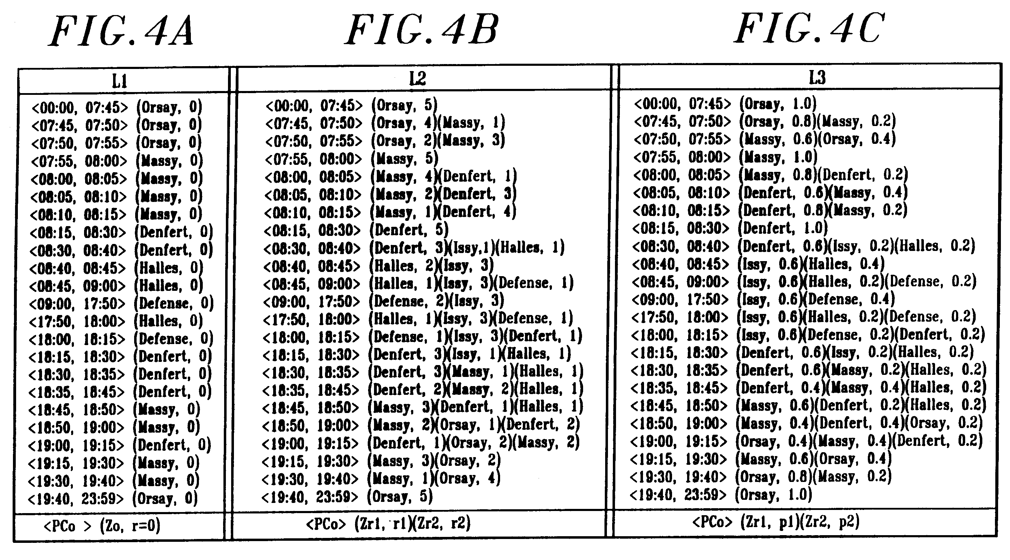

Plus précisément, l'algorithme relatif à l'étape i) est illustré dans la figure 3, et la liste L1 obtenue par cet algorithme est représentée sur la figure 4A.

En bref, la première opération 10 concerne l'initialisation des variables k, j, jj, DSkj, DSkjmin.

Dans l'opération 10, la variable k est initialisée à 0h00', j à 1 (lundi), jj à 1, et DSkjmin à 23h59'.

Lors de l'opération 20, on exécute une première boucle tant que la variable j est inférieure ou égale à 5.

Lors de l'opération 30, on exécute une seconde boucle tant que la variable k est inférieure à 23h59'.

L'opération 40 comprend notamment une troisième boucle 50 qui est exécutée tant que la variable jj est inférieure ou égale à 5 et dans laquelle on cherche parmi les dates de fin des périodes chronologiques quotidiennes du fichier STAT, celle qui est supérieure à k et qui est la plus petite d'entre elles (DSkjj <DSkjmin).

Une fois trouvé DSkjj, on pose DSkjjmin = DSkjj et l'identité Z kjmin = Z kjj et on incrémente de 1 la variable jj.

Lors de l'étape 60, on stocke l'identité quotidienne Zkj correspondant à la DSkjj ainsi trouvée. On attribue à la variable k la valeur de la date courante DSkj et on stocke dans la période chronologique quotidienne PCo de début DEo égal à K et de fin égale à DSkj l'identité Zo correspondante accompagnée d'une récurrence r de valeur 0.

Lorsque la variable k est supérieure à 23h59, on incrémente la variable j de 1.

En fin de première boucle, on obtient une liste L1 telle que représentée sur la figure 4A.

Dans l'exemple illustré figure 4A, la première période chronologique hebdomadaire PCo <00h00'-7h45'> est affectée de la zone de localisation d'identité quotidienne Orsay avec une récurrence r de valeur 0. La période chronologique hebdomadaire suivante PCo+1 <7h45' à 7h50'> est affectée de la zone de localisation d'identité quotidienne Orsay avec une récurrence r de valeur 0.

Après l'obtention de la liste L1 contenant les périodes chronologiques hebdomadaires (ou mensuelles ou autres), on procède à l'étape ii).

En bref dans cette étape ii), pour chaque période chronologique hebdomadaire PCo de la liste L1, il est prévu de parcourir le fichier STAT et de stocker les identités quotidiennes de zone de localisation affectées de leur récurrence r pendant ladite période chronologique hebdomadaire.

Ensuite, lors de l'étape iii), on compte la récurrence de chaque identité quotidienne pour chaque période chronologique quotidienne.

On obtient une liste L2 (figure 4B) de périodes chronologiques hebdomadaires successives affectées chacune d'une liste d'identités quotidiennes de zones d'identification avec leur récurrence r.

Enfin lors de l'étape iv), on classe par probabilité p décroissante les identités quotidiennes de zone de localisation pour chaque période chronologique hebdomadaire (liste L3, figure 4C).

On entend ici par probabilité p, le rapport de la récurrence r de l'identité de la zone de localisation concernée sur la somme de toutes les récurrences des identités de zone de localisation.

De préférence, il est prévu de conserver dans la liste L3 ainsi classée seulement les identités quotidiennes de zone de localisation présentant une probabilité supérieure à un seuil prédéterminé.

Avantageusement, ce seuil est déterminé en fonction des caractéristiques de l'abonné mobile et des coûts de mise à jour de localisation et de recherche d'abonnés. Par exemple, il est de 20%.

Le profil ou liste L3 ainsi obtenu comprend une liste de couplets $(Z_i, f_i)$ où $Z_i$ est une identité de zone de localisation et $f_i$ est une fonction à un opérande (ici le temps) donnant la probabilité de localiser le poste téléphonique dans la zone d'identité $Z_i$ à un instant donné.

Une période chronologique quotidienne et/ou hebdomadaire est codée sur 4 octets.

La probabilité associée à une identité quotidienne de zone de localisation est codée sur 2 octets.

Une période chronologique quotidienne correspondant à un jour donné (ouvrable, samedi, dimanche, etc) nécessite au maximum (dans l'exemple) 16 octets.

Dans le cas où chaque jour comprend 25 périodes chronologiques quotidiennes et si on distingue 10 jours différents (ouvrables, samedis, etc) le profil ou liste L3 d'un abonné mobile comprend environ 4000 octets, soit 32 kbits pour le stockage du profil L3.

Dans le cas d'une période d'observation de l'ordre de 15 jours pour chaque abonné, la taille moyenne du fichier de travail STAT est de l'ordre de 900 octets, soit 72 kbits.

La taille mémoire supplémentaire pour gérer un abonné avec le procédé radiotéléphonique selon l'invention est donc de l'ordre de 104 kbits.

Il est à remarquer que cette valeur est uniquement illustrative. Elle peut être plus élevée pour des abonnés ayant des mouvements plus aléatoires, ou plus faible pour des abonnés ayant des mouvements plus stables.

Dans le cas où un enregistreur de localisation nominale HLR contient 150 000 à 300 000 abonnés, la taille mémoire totale nécessaire à rajouter est de l'ordre de 15,6 gigabits pour gérer 150 000 abonnés ou 31,2 gigabits pour gérer 300 000 abonnés.

Il est clair que le profil L3 ainsi déterminé est fixe et face à des changements de comportement de l'abonné n'apporte pas une solution totalement satisfaisante dans la localisation des abonnés.

Il convient donc de prévoir une mise à jour du profil L3.

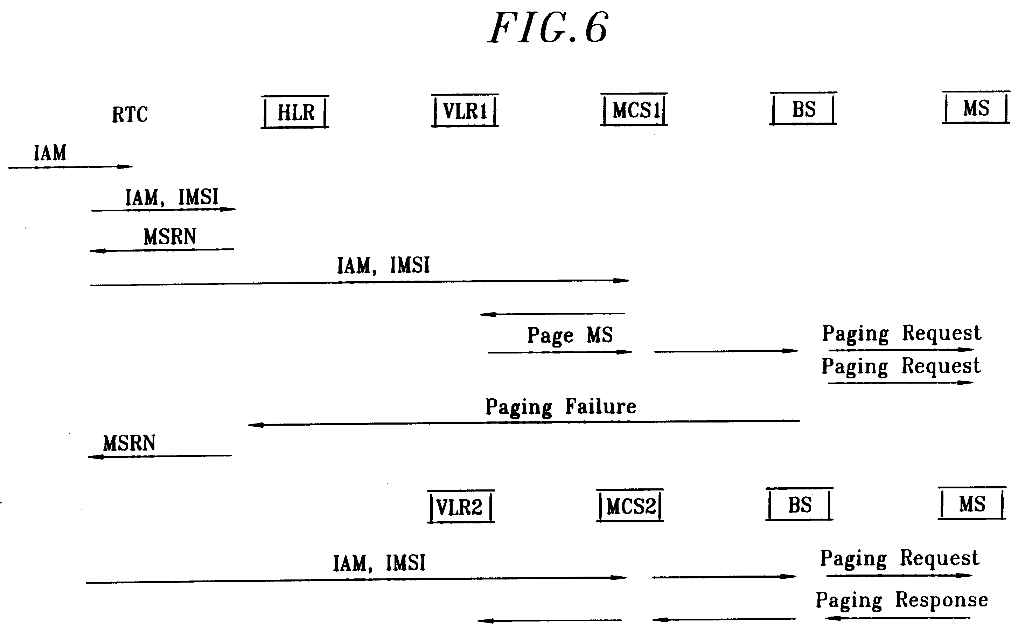

Pour permettre la mise à jour du profil L3, il est prévu selon l'invention de construire en mode de fonctionnement du poste téléphonique mobile, un fichier de travail MAJ (figure 5A) similaire à celui STAT utilisé pour la construction initiale du profil L3 et qui va être géré au niveau des moyens d'enregistrement de localisation nominale HLR pendant une durée qui suit la durée d'observation initiale.

La seule différence entre le fichier STAT et le fichier MAJ est au niveau de l'absence de certaines périodes chronologiques quotidiennes PCkj correspondant au cas où le poste téléphonique mobile, parce que se trouvant en mode de fonctionnement dans l'une des zones de localisation du fichier STAT pendant la période chronologique quotidienne correspondante PCkj, ne s'est pas signalé auprès des moyens d'enregistrement.

En d'autres termes, le fichier MAJ contient des événements correspondant à des zones de localisation visitées par le poste téléphonique mobile en mode de fonctionnement et non enregistrées dans le fichier STAT pendant la durée d'observation initiale.

Par exemple, le fichier MAJ contient l'information relative au fait que le poste téléphonique mobile est entré dans la zone de localisation d'identité Nation à 8h40' le lundi et en est sorti à 18h20'.

Cette information n'ayant pas été enregistrée dans le fichier STAT pendant la durée d'observation initiale, il convient de traiter cette information conformément à l'algorithme décrit en référence aux figures 4A, 4B et 4C pour mettre à jour le profil L3.

Le résultat de cette mise à jour est représenté sous la forme de la liste L4 (figure 5B).

A titre d'exemple, le fichier MAJ contient ici les informations relatives aux 7 derniers jours de fonctionnement du poste téléphonique mobile.

Il est à remarquer que cette durée m est à la discrétion de l'opérateur.

Avantageusement, la mise à jour du profil L3 est réalisée tous les m jours.

Il est à noter qu'une mise à jour du profil L3 au niveau de l'enregistreur de localisation nominal HLR entraîne automatiquement une mise à jour du profil L3 stocké dans le poste téléphonique mobile (téléchargement de la nouvelle version du profil par exemple).

En pratique, lors de la construction du nouveau profil L3 tenant compte des mises à jour L4, le dénominateur des récurrences est maintenant la valeur m (correspondant au nombre de jours d'observation pour la mise à jour).

Ainsi, dans le cas où, pour une période chronologique hebdomadaire particulière, la somme des probabilités des nouvelles zones de localisation est significative (supérieure à 50% par exemple), l'abonné est observé à nouveau (comme lors de la construction du profil L3) pendant les périodes chronologiques hebdomadaires dans lesquelles figurent les nouvelles zones de localisation retenues.

Par ailleurs, en plus des informations long terme, c'est à dire celles contenues dans le profil L3 dit fixe, un profil dit dynamique intègre avantageusement des informations court terme prenant en compte des informations récentes concernant la localisation de l'utilisateur.

Par exemple, un appel reçu ou donné par l'abonné mobile permet au système de localisation de connaître la position de l'usager et d'en tenir compte pendant la période plus ou moins longue qui suit la date de cette information.

Par ailleurs, pour augmenter l'intelligence du procédé radiotéléphonique selon l'invention, il est prévu d'utiliser des données générales pour prédire les mouvements des abonnés. Ces données générales peuvent être relatives à la cartographie donnant la position des zones géographiques les unes par rapport aux autres, des informations relatives au trafic routier pour prévoir la progression d'un abonné sur son chemin habituel en fonction de la fluidité de la circulation, ou des informations relatives à la météorologie, par exemple la température qui peut influer sur le moyen de transport utilisé et donc sur l'itinéraire suivi.

Il est à remarquer que dans la description ci-avant, la structure des profils fixes est très simple.

En effet, ils sont linéaires alors qu'en variante, une structure en arbre par exemple pourrait permettre d'augmenter l'intérêt des informations détenues par les moyens d'enregistrement.

Comme vu ci-avant, l'initialisation du profil fixe L3 d'un abonné est réalisé pendant une période plus ou moins longue que l'on peut fixer à une semaine ou un mois, consécutive à la souscription de l'abonné. Cette initialisation peut aussi être réalisée manuellement par l'abonné.

Avantageusement, pour garder la procédure transparente à l'utilisateur, le système réalise lui-même et automatiquement les statistiques sur les mouvements de l'abonné.

Ce résultat est obtenu en suivant les mouvements de l'utilisateur pendant une durée d'observation en utilisant une procédure analogue à celle utilisée dans le GSM où le système enregistre les changements de zone de localisation de l'abonné.

Il est à noter que la fin de la période d'observation doit correspondre au moment auquel le procédé a acquis une précision suffisante pour au moins un des couplets $a_i$, $f_i$ du profil fixe.

La mise à jour des profils fixes peut être réalisée automatiquement dès que les fonctions $f_i$ sont modifiées de façon significative. Cette modification intervient lorsque l'abonné s'enregistre fréquemment en dehors de la zone géographique précédemment stockée dans le profil fixe.

Dans le cas où le système utilise en outre des profils dynamiques, la prise en compte des mouvements de l'utilisateur à court ou moyen terme est avantageusement possible.

Comme pour le profil fixe, la méthode de base pour construire un profil dynamique consiste à enregistrer les dates, heures, minutes et identité de zone de localisation de la dernière connexion de l'abonné au réseau.

Par exemple, soit TA date à laquelle l'abonné a été localisé dans la zone de localisation AA. Au temps TB, l'utilisateur reçoit un appel.

Si TB - TA x VA, où VA est la vitesse de déplacement du mobile, est inférieur ou égal à DA, où DA est une distance prédéterminée, par exemple 1,5 fois le rayon moyen d'une zone de localisation, alors le procédé selon l'invention va émettre des avis de recherche dans zone AA en priorité, puis éventuellement dans les zones alentour et enfin en cas de localisation négative, dans les autres zones du profil dynamique.

Les informations générales évoquées plus haut permettent avantageusement d'ajuster, c'est-à-dire de réorganiser, en modifiant les valeurs des $f_i$, le profil dynamique.

Comme vu ci-avant, la taille d'un profil occupe une taille de l'ordre de 32 kbits, il est donc possible de stocker ce profil sur une carte dite SIM "Subscriber Identity Module" dans l'application GSM à laquelle il est avantageusement rajoutée une mémoire de taille suffisante, 32 kbits dans l'exemple.

Le téléchargement du profil des moyens d'enregistrement HLR vers la carte SIM peut se faire naturellement en établissant une connexion appel du réseau vers le mobile et en utilisant un service d'échange de données appropriées.

Les caractéristiques du service étant spécifiées dans le champ de l'établissement émis lors de la demande de connexion. L'invention nécessite la connaissance du temps courant jour, heure et minute au niveau du poste téléphonique mobile.

Cette connaissance peut être obtenue de manière appropriée, par exemple simplement par diffusion de cette information, par exemple par les services de télédistribution de messages courts (Short Messages Cell Broadcast) par chaque station de base BS.

Dans ce cas le canal utilisé est le canal CBCH (Cell Broadcast Channel).

Grâce à la connaissance du temps courant et de l'identité de la zone de localisation courante, le poste téléphonique mobile dispose des informations nécessaires à la demande de mise à jour automatique du profil L3 stocké de façon non volatile dans une mémoire appropriée telle que la carte SIM.

Cette demande de mise à jour automatique s'effectue de la façon suivante selon l'invention.

Par exemple, à la mise sous tension, le poste téléphonique mobile écoute le canal de veille et reçoit sur ce canal l'identité de zone de localisation courante diffusée par les stations de base situées dans la zone de localisation où se trouve le poste téléphonique mobile.

En réponse à cette identité ainsi écoutée, le poste téléphonique mobile sélectionne selon le temps courant, une période chronologique hebdomadaire du profil L3, et cherche dans la liste des identités quotidiennes de zones de localisation affectées à cette période chronologique hebdomadaire si l'identité ainsi écoutée appartient à la liste ainsi sélectionnée.

En cas d'appartenance positive, aucune opération n'est effectuée par le poste téléphonique mobile tandis en cas d'appartenance négative, une demande de mise à jour de localisation est exécutée conformément au protocole GSM.

Nous allons maintenant décrire la localisation d'abonnés selon l'invention dans le cas du GSM (figure 6).

Tout d'abord, il est à noter que pour la mise en oeuvre de l'invention dans une installation du type GSM, il convient de modifier légèrement le protocole du GSM lors de la mise à jour de localisation.

En effet, la procédure de mise à jour de localisation dans le cas d'un changement de zone de localisation à l'intérieur d'un même enregistreur de localisation des visiteurs doit être reportée selon l'invention sur l'enregistreur de localisation nominale HLR.

En d'autres termes, au lieu de la procédure GSM classique, il est prévu de stocker dans les moyens d'enregistrement de localisation nominale HLR, le changement de zone de localisation même si celui-ci se produit à l'intérieur d'un même enregistreur de localisation des visiteurs VLR.

Grâce à cette légère modification, le procédé permet de garder l'historique des trajets en termes d'identités de zones de localisation visitées et de dates auxquelles les changement de zone de localisation ont eu lieu.

Il est à observer que la construction et les mises à jour du profil d'un abonné se font au niveau de l'enregistreur de localisation nominal HLR et jamais au niveau du mobile.

En bref, la localisation des abonnés mobiles dans une installation du type GSM s'effectue de la façon suivante.

En réponse à une demande d'appel IAM pour "Initial Address Message" à destination du poste téléphonique mobile MS d'identité d'abonné IMSI, les moyens d'enregistrement de localisation nominal HLR indiquent par le message MSRN "Mobile Subscriber Roaming Number" au réseau de communication téléphonique RTC le centre de commutation du service mobile MSC1 qui gère la zone de localisation dont l'identité à été sélectionnée dans le profil L3 selon l'invention.

C'est-à-dire l'identité de la zone de localisation ayant la probabilité la plus forte dans la liste L3 pour la période chronologique hebdomadaire correspondant à l'instant de l'appel.

L'enregistreur de localisation des visiteurs VLR en réponse à un message émanant du centre MSC1 envoie le message de recherche " page MS" dans chacune des stations de base de la zone de localisation ainsi sélectionnée qui émettent chacune le message "paging request".

La procédure de localisation en cas d'échec se termine par le message "Paging Failure". Par exemple ce message "paging failure" est émis en réponse à une certaine temporisation ou après un échec répété un nombre de fois prédéterminé dans cette zone de localisation.

En cas de localisation négative, en réponse au message "paging failure", les moyens d'enregistrement HLR diffusent un autre message de recherche "PAGE MS" dans une autre zone de localisation sélectionnée dans le profil L3 selon l'invention.

C'est-à-dire l'identité de la zone de localisation de rang inférieur à celle ayant la probabilité la plus forte dans la liste L3 pour la période chronologique hebdomadaire correspondant à l'instant de l'appel.

Le poste téléphonique mobile MS écoute l'avis de recherche s'il se trouve dans la zone de localisation ainsi sélectionnée.

En cas de localisation positive, le poste téléphonique établit la communication téléphonique avec le demandeur selon le protocole GSM classique en émettant le message "Paging Response".

Il est à remarquer que dans le processus de recherche au niveau de l'enregistreur de localisation nominale HLR, lors de la réception de la demande de recherche d'abonné, il est prévu d'examiner pour une période chronologique hebdomadaire particulière la liste de zones de localisation du profil L3 de façon séquentielle. La recherche commence dans la zone de localisation située en tête de liste (plus forte probabilité). Si un message de "paging failure" est reçu après la recherche dans la première zone de localisation, une recherche continue dans la seconde zone de localisation de la liste et cela est répété le cas échéant jusqu'à la dernière zone de localisation enregistrée dans le profil pour la période chronologique hebdomadaire concernée.

La détermination de la période chronologique hebdomadaire particulière s'effectue à partir de la date courante disponible de manière appropriée au niveau de l'enregistreur de localisation nominal HLR.

En variante, l'émission du message d'avis de recherche est effectuée simultanément dans les zones de localisation dont les identités figurent dans le profil L3 pour une période chronologique hebdomadaire particulière.

## Revendications

**1.** Procédé radiotéléphonique comprenant les étapes suivantes:

- a) prévoir au moins un poste téléphonique mobile (MS) pour un abonné mobile prédéterminé possédant une identité d'abonné mobile prédéterminée (IMSI), ledit poste téléphonique mobile étant destiné à être en intercommunication avec des postes téléphoniques fixes (PF) raccordés à un réseau de communication téléphonique fixe (RTC),

- b) prévoir une pluralité de zones géographiques de localisation chacune couverte radioélectriquement par au moins une station de base (BS1,BS2), chaque zone de localisation ayant une identité prédéterminée (Zi),

- c) prévoir des moyens d'enregistrement (MENR) reliés aux stations de base et contenant des informations relatives à l'identité de l'abonné (IMSI) et à l'identité de la zone de localisation courante du poste téléphonique mobile,

- d) au niveau des moyens d'enregistrement (MENR), créer un profil (L3) pour l'abonné mobile constitué d'une liste de couplets (Zi,fi) où (Zi) est une identité de zone de localisation et (fi) représente une fonction à au moins un opérande donnant la probabilité de localiser l'abonné dans la zone de localisation (Zi) à un instant donné et stocker ledit profil ainsi crée dans les moyens d'enregistrement (MENR),

- e) après stockage du profil (L3), en réponse à une demande d'appel téléphonique à destination de l'abonné mobile (IAM), interroger les moyens d'enregistrement pour sélectionner dans le profil (L3) au moins l'identité de zone de localisation de plus forte probabilité selon l'opérande et diffuser un message de recherche (PAGE MS) dans la zone de localisation dont l'identité est ainsi sélectionnée,

- f) en cas de localisation positive, le poste téléphonique mobile reçoit le message de recherche et établit en réponse l'intercommunication radiotéléphonique avec le demandeur, tandis qu'en cas de localisation négative (PAGE FAILURE), les moyens d'acheminement (MACH) diffusent le message de recherche (PAGE MS) dans une autre zone de localisation, le cas échéant,

  caractérisé en ce qu'il est prévu de créer le profil (L3) à partir d'informations enregistrées dans les moyens d'enregistrement (MENR) sous la forme d'un premier fichier de travail (STAT) et obtenues au cours des déplacements d'un abonné mobile particulier pendant une première durée d'observation prédéterminée, lesdites informations étant relatives à une pluralité de périodes chronologiques quotidiennes s'étalant sur la première durée d'observation et ayant chacune un début (DEkj) déterminé par l'heure à laquelle l'abonné mobile est entré dans une zone de localisation d'identité quotidienne particulière (Z k-1j), et une fin (DSkj) déterminée par l'heure à laquelle ledit abonné mobile est sorti de ladite zone de localisation d'identité (Z k-1j) et est entré dans une autre zone de localisation d'identité (Zkj).

**2.** Procédé selon la revendication 1, caractérisé en ce qu'à partir du premier fichier de travail (STAT), il est prévu au niveau des moyens d'enregistrement de procéder à un algorithme de traitement comprenant les étapes suivantes :

- i) construire, à partir des heures de début et de fin des différentes périodes chronologiques quotidiennes du premier fichier de travail (STAT), une liste (L1) de périodes chronologiques hebdomadaires successives (PCo) : la première période chronologique hebdomadaire (PCo) ayant un début (DEo) de valeur supérieure ou égale à 0h00' et une fin correspondant à l'heure de fin de la période chronologique quotidienne (PCkj) du premier fichier de travail (STAT) ayant la plus petite valeur parmi celles des heures de fin des périodes chronologiques quotidiennes dudit premier fichier de travail, et la dernière période chronologique hebdomadaire ayant une fin (DSo) de valeur inférieure ou égale à 23h59' et un début (DEo) correspondant à l'heure de début (DEkj) de la période chronologique quotidienne (PCkj) ayant la plus grande valeur parmi les heures de début des périodes chronologiques quotidiennes du premier fichier de travail (STAT), à chaque période chronologique hebdomadaire étant affectée l'identité quotidienne de la zone de localisation de la période chronologique quotidienne correspondante ;

- ii) en parcourant en parcourant les informations du premier fichier de travail (STAT), saisir les différentes identités quotidiennes de zone de localisation affectées pour chaque période chronologique hebdomadaire ainsi construite ;

- iii) compter la récurrence de chaque identité quotidienne de zone de localisation pour chaque période chronologique hebdomadaire ; et

- iv) ordonner les différentes identités quotidiennes de zones de localisation selon leur récurrence pour chaque période chronologique hebdomadaire.

**3.** Procédé selon la revendication 2, caractérisé en ce qu'il comprend en outre les étapes suivantes:

- construire, en mode de fonctionnement du poste téléphonique mobile, un second fichier de travail (MAJ), sensiblement similaire au premier fichier de travail (STAT), et contenant des informations relatives aux périodes chronologiques quotidiennes et aux identités de zones de localisation enregistrées pendant une seconde durée prédéterminée qui suit la première durée d'observation du premier fichier de travail et non enregistrées dans ledit premier fichier de travail (STAT) pendant ladite première durée d'observation ; et

- traiter ces nouvelles informations conformément aux étapes i à iv pour mettre à jour le profil (L3).

**4.** Installation radiotéléphonique pour la mise en oeuvre du procédé selon l'une des revendications précédentes, comprenant:

- au moins un poste téléphonique mobile (MS) pour un abonné mobile prédéterminé possédant une identité d'abonné mobile prédéterminée (IMSI), ledit poste téléphonique mobile étant destiné à être en intercommunication avec des postes téléphoniques fixes (PF) raccordés à un réseau de communication téléphonique fixe (RTC),

- une pluralité de zones géographiques de localisation chacune couverte radioélectriquement par au moins une station de base (BS1,BS2), chaque zone de localisation ayant une identité prédéterminée,

- des moyens d'enregistrement (MENR) reliés aux stations de base et contenant des informations relatives à l'identité de l'abonné (IMSI) et à l'identité de la zone de localisation courante du poste téléphonique mobile,

- au niveau des moyens d'enregistrement (MENR), des moyens de traitement propres à créer un profil (L3) pour l'abonné mobile constitué d'une liste de couplets (Zi,fi) où (Zi) est une identité de zone de localisation et (fi) représente une fonction à au moins un opérande donnant la probabilité de localiser l'abonné dans la zone de localisation (Zi) à un instant donné et des moyens de stockage propres à stocker ledit profil (L3) ainsi crée, caractérisée en ce que lesdits moyens de traitement sont propres à créer le profil (L3) à partir d'informations enregistrées dans les moyens d'enregistrement (MRNR) sous la forme d'un premier fichier de travail (STAT) et obtenues au cours des déplacements d'un abonné mobile particulier pendant une première durée d'observation prédéterminée, lesdites informations étant relatives à une pluralité de périodes chronologiques quotidiennes s'étalant sur la première durée d'observation et ayant chacune un début (DEkj) déterminé par l'heure à laquelle l'abonné mobile est entré dans une zone de localisation d'identité quotidienne particulière (Z k-1j), et une fin (DSkj) déterminée par l'heure à laquelle ledit abonné mobile est sorti de ladite zone de localisation d'identité (Zkj) et est entré dans une autre zone de localisation d'identité (ZKj).

**Claims**

**1.** Radiotelephony process comprising the following stages:

a) providing at least one mobile telephone (MS) for a predetermined mobile subscriber having a predetermined mobile subscriber identity (IMSI), said mobile telephone being intended for intercommunication with fixed telephones (PF) connected to a fixed telephone communication network (RTC),

b) providing a plurality of geographical location zones, each radio-covered by at least one base station (BS1, BS2), each location zone having a predetermined identity (Zi),

c) providing recording means (MENR) connected to the base stations and containing information relative to the identity of the subscriber (IMSI) and the identity of the current location zone of the mobile telephone,

d) at the recording means (MENR), creating a profile (L3) for the mobile subscriber constituted by a list of couplets (Zi, fi), in which (Zi) is a location zone identity and (fi) represents a function with at least one operand giving the probability of locating the subscriber in the location zone (Zi) at a given time and storing said profile created in this way in the recording means (MENR),

e) after storage of the profile (L3), in response to a telephone call request intended for the mobile subscriber (IAM), interrogating the recording means for selecting in the profile (L3) at least the highest probability location zone identity according to the operand and broadcasting a search message (PAGE MS) in the location zone, whose identity is selected in this way,

f) in the case of a positive location, the mobile telephone receives the search message and in response establishes the radiotelephone intercommunication with the caller, whereas in the case of a negative location (PAGE FAILURE), the routing means (MACH) broadcast the search message (PAGE MS) in another location zone, if appropriate,
characterized in that the profile (L3) is created on the basis of information recorded in the recording means (MENR) in the form of a first work file (STAT) and obtained during movements of a particular mobile subscriber during a first, predetermined observation period, said information relating to a plurality of daily chronological periods spread over the first observation period and each having a start (DEkj) determined by the time at which the mobile subscriber has entered a particular, daily identity location zone (Z k-1j) and a finish (DSkj) determined by the time at which said mobile subscriber has left said identity location zone (Z k-1j) and has entered another identity location zone (Zkj).

2. Process according to claim 1, characterized in that on the basis of the first work file (STAT), at the recording means there is a processing algorithm comprising the following stages:

    i) constructing, on the basis of the start and finish times of the different daily chronological periods of the first work file (STAT), a list (L1) of successive, weekly chronological periods (PCo): the first weekly chronological period (PCo) having a start (DEo) with a value equal to or higher than 0000 hours and a finish corresponding to the finish time of the weekly chronological period (PCkj) of the first work file (STAT) having the smallest value among those of the finish times of the daily chronological periods of said work file and the final weekly chronological period having a finish (DSo) of a value equal to or lower than 2359 hours and a start (DEo) corresponding to the starting time of the daily chronological period (PCkj) having the highest value among the starting times of the daily chronological periods of the first work file (STAT), whereby to each weekly chronological period is allocated the daily identity of the location zone of the corresponding, daily chronological period,

    ii) on examining the information of the first work file (STAT), collecting the different daily identities of the location zone allocated for each thus constructed, weekly chronological period,

    iii) counting the recurrence of each daily identity of the location zone for each weekly chronological period and

    iv) sequencing the different daily identities of the location zones as a function of their recurrence for each weekly chronological period.

3. Process according to claim 2, characterized in that it also comprises the following stages:

    - constructing, in the operating mode of the mobile telephone, a second work file (MAJ), substantially similar to the first work file (STAT) and containing information relative to the daily chronological periods and to the location zone identities recorded during a second predetermined period following the first observation period of the first work file and not recorded in said first work file (STAT) during said first observation period and

    - processing said new information in accordance with stages i to iv in order to update the profile (L3).

4. Radiotelephony installation for performing the process according to one of the preceding claims, comprising:

    - at least one mobile telephone (MS) for a predetermined mobile subscriber having a predetermined, mobile subscriber identity (IMSI), said mobile telephone being intended to intercommunicate with fixed telephones (PF) connected to a fixed telephone communication network (RTC),

    - a plurality of geographic location zones, each radio-covered by at least one base station (BS1, BS2), each location zone having a predetermined identity,

    - recording means (MENR) linked with the base stations and containing information relative to the subscriber identity (IMSI) and the identity of the current location zone of the mobile telephone,

    - with respect to the recording means (MENR), processing means able to create a profile (L3) for the mobile subscriber constituted by a list of couplets (Zi, fi) in which (Zi) is a location zone identity and (fi) represents a function with at least one operand giving the probability of locating the subscriber in the location zone (Zi) at a given time and storage means able to store the thus created profile (L3),

characterized in that said processing means are able to create the profile (L3) from information recorded in the recording means (MRNR) in the form of a first work file (STAT) and obtained during movements of a particular mobile subscriber during a first, predetermined observation period, said information relating to a plurality of daily chronological periods spreading over the first observation period and each having a start (DEkj) determined by the time at which the mobile subscriber has entered a particular, daily identity location zone (Z k-1j) and a finish (DSkj) determined by the time at which said mobile subscriber has left said identity location zone (Zkj) and has entered another identity location zone (Zkj).

**Patentansprüche**

1. Funktelefonverfahren, welches folgende Schritte umfaßt:

   - a) Vorsehen mindestens eines mobilen Telefons (MS) für einen vorbestimmten mobilen Teilnehmer, welcher eine vorbestimmte mobile Teilnehmeridentität (IMSI) besitzt, wobei das mobile Telefon dazu bestimmt ist, mit stationären Telefonen (PF) in Interkommunikation zu stehen, die an ein Telefonkommunikationsfestnetz (RTC) angeschlossen sind,

   - b) Vorsehen einer Vielzahl geographischer Lokalisierungszonen, wobei eine jede radioelektrisch durch mindestens eine Basisstation (BS1, BS2) abgedeckt ist, wobei eine jede Lokalisierungszone eine vorbestimmte Identität (Zi) hat,

   - c) Vorsehen von Registrierungsmitteln (MENR), die mit den Basisstationen verbunden sind und Informationen bezüglich der Identität des Teilnehmers (IMSI) und bezüglich der Identität der laufenden bzw. tatsächlichen Lokalisierungszone des mobilen Telefons enthalten;

   - d) auf Niveau der Registrierungsmittel (MENR) Erzeugung eines Profils (L3) für den mobilen Teilnehmer, das aus einer Zuordnungsliste (liste de couplets) (Zi, fi) gebildet ist, die eine Identität einer Lokalisierungszone (Zi) ist und eine Funktion (fi) mit mindestens einem Operanden aufweist, die die Wahrscheinlichkeit angibt, den Teilnehmer in der Lokalisierungszone (Zi) zu einem gegebenen Zeitpunkt zu lokalisieren und Speichern des so in den Registrierungsmitteln (MENR) erzeugten Profils,

   - e) nach Speichern des Profils (L3), als Antwort auf eine Telefongesprächsanforderung mit Ziel des mobilen Teilnehmers (IAM), Abfragen der Registrierungsmittel, um in dem Profil (L3) mindestens die Lokalisierungszonenidentität einer größeren Wahrscheinlichkeit gemäß dem Operanden auszuwählen und eine Suchmeldung (PAGE MS) in der Lokalisierungszone zu senden, deren Identität somit ausgewählt ist,

   - f) im Fall einer positiven Lokalisierung empfängt das mobile Telefon die Suchmeldung und stellt als Antwort die Funktelefon-Interkommunikation mit dem anrufenden Teilnehmer her, während im Fall einer negativen Lokalisierung (PAGE FAILURE) Mittel (MACH) zur automatischen Leitwegwahl die Suchmeldung (PAGE MS) gegebenenfalls in einer anderen Lokalisierungszone senden,

   dadurch gekennzeichnet, daß vorgesehen ist, das Profil (L3) ausgehend von Informationen zu erzeugen, die in den Registrierungsmitteln (MENR) in Form einer ersten Arbeitsdatei (STAT) gespeichert sind und im Verlauf der Ortsveränderungen eines besonderen mobilen Teilnehmers während einer vorbestimmten ersten Beobachtungsdauer erhalten wurden, wobei sich die Informationen auf eine Vielzahl täglicher chronologischer Perioden beziehen, welche sich auf die erste Beobachtungsdauer erstrecken und jeweils einen Anfang (DEkj), der durch die Stunde bestimmt ist, in welcher der mobile Teilnehmer in eine besondere tägliche Identitätslokalisierungszone (Z k-1j) eingetreten ist, und ein Ende (DSkj) haben, das durch die Stunde bestimmt ist, in welcher der mobile Teilnehmer die Identitätslokalisierungszone (Z k-1j) verlassen hat und in eine andere Identitätslokalisierungszone (Zkj) eingetreten ist.

2. Verfahren nach Anspruch 1, dadurch gekennzeichnet, daß ausgehend von der ersten Arbeitsdatei (STAT) auf dem Niveau der Registrierungsmittel vorgesehen ist, einen Verarbeitungsalgorithmus auszuführen, welcher folgende Schritte umfaßt:

   - i) ausgehend von den Anfangs- und Endstunden der verschiedenen täglichen chronologischen Perioden der ersten Arbeitsdatei (STAT) Erzeugen einer Liste (L1) aufeinanderfolgender wöchentlicher chronologischer Perioden (PCo), wobei die erste wöchentliche chronologische Periode (PCo) einen Anfang (DEo) eines Werts größer oder gleich 0h00' und ein Ende hat, welches der Stunde des Endes der täglichen chronologischen Periode (PCkj) der ersten Arbeitsdatei (STAT) entspricht, die den kleinsten Wert unter denjenigen der Endstunden der täglichen chronologischen Perioden der ersten Arbeitsdatei hat, und die letzte wöchentliche chronologische Periode ein Ende (DSo) eines Werts kleiner oder gleich 23h59' und einen Anfang (DEo) hat, welcher der Anfangsstunde (DEkj) der täglichen chronologischen Periode (PCkj) entspricht, die den größten Wert unter den Anfangsstunden der täglichen chronologischen Perioden der ersten Arbeitsdatei (STAT) hat, wobei jeder wöchentlichen chronologischen Periode die tägliche Identität der Lokalisierungszone der entsprechenden täglichen chronologischen Periode zugeordnet ist,

- ii) indem die Informationen der ersten Arbeitsdatei (STAT) „durchblättert" werden, Erfassen der verschiedenen täglichen Identitäten einer Lokalisierungszone, die für jede, auf diese Weise erzeugte wöchentliche chronologische Periode zugeordnet sind,

- iii) Zählen der Rekursion einer jeden täglichen Lokalisierungszonenidentität für jede wöchentliche chronologische Periode und

- iv) Ordnen der verschiedenen täglichen Identitäten von Lokalisierungszonen nach ihrer Rekursion für jede wöchentliche chronologische Periode.

3. Verfahren nach Anspruch 2, dadurch gekennzeichnet, daß es ferner folgende Schritte umfaßt:

- im Betriebsmodus des mobilen Telefons Erzeugen einer zweiten Arbeitsdatei (MAJ), die im wesentlichen der ersten Arbeitsdatei (STAT) ähnlich ist und Informationen enthält, die sich auf die täglichen chronologischen Perioden und auf die Lokalisierungszonenidentitäten beziehen, die während einer zweiten vorbestimmten Dauer gespeichert wurden, welche der ersten Beobachtungsdauer der ersten Arbeitsdatei folgt, und nicht in der ersten Arbeitsdatei (STAT) während der ersten Beobachtungsdauer gespeichert wurden und

- Bearbeiten dieser neuen Informationen gemäß der Schritte i bis iv, um das Profil (L3) zu aktualisieren.

4. Funktelefonanlage zur Ausführung des Verfahrens nach einem der vorstehenden Ansprüche, die folgendes umfaßt:

- mindestens ein mobiles Telefon (MS) für einen vorbestimmten mobilen Teilnehmer, welcher eine vorbestimmte mobile Teilnehmeridentität (IMSI) besitzt, wobei das mobile Telefon dazu bestimmt ist, mit stationären Telefonen (PF) in Interkommunikation zu stehen, die an ein Telefonkommunikationsfestnetz (RTC) angeschlossen sind,

- eine Vielzahl geographischer Lokalisierungszonen, wobei eine jede radioelektrisch durch mindestens eine Basisstation (BS1, BS2) abgedeckt ist, wobei eine jede Lokalisierungszone eine vorbestimmte Identität hat,

- Registrierungsmittel (MENR), die mit den Basisstationen verbunden sind und Informationen bezüglich der Identität des Teilnehmers (IMSI) und der Identität der tatsächlichen Lokalisierungszone des mobilen Telefons enthalten,

- auf dem Niveau der Registrierungsmittel (MENR) Verarbeitungsmittel, die geeignet sind, ein Profil (L3) für den mobilen Teilnehmer zu erzeugen, das aus einer Zuordnungsliste (Liste de couplets) (Zi, fi) gebildet ist, die eine Lokalisierungszonenidentität (Zi) und eine Funktion (fi) mit mindestens einem Operanden aufweist, die die Wahrscheinlichkeit angibt, den Teilnehmer in der Lokalisierungszone (Zi) zu einem gegebenen Zeitpunkt zu lokalisieren, und Speichermittel, die geeignet sind, das auf diese Weise erzeugte Profil (L3) zu speichern, dadurch gekennzeichnet, daß die Verarbeitungsmittel geeignet sind, das Profil (L3) ausgehend von Informationen zu erzeugen, die in den Registrierungsmitteln (MENR) in Form einer ersten Arbeisdatei (STAT) gespeichert sind und im Verlauf der Ortsveränderungen eines besonderen mobilen Teilnehmers während einer ersten vorbestimmten ßeobachtungsdauer erhalten wurden, wobei sich die Informationen auf eine Vielzahl von täglichen chronologischen Perioden beziehen, die sich auf die erste Beobachtungsdauer erstrecken und jeweils einen Anfang (DEkj), der durch die Stunde bestimmt ist, in welcher der mobile Teilnehmer in eine Lokalisierungszone besonderer täglicher Identität (Z k-1j) eingetreten ist, und ein Ende (DSkj) haben, das durch die Stunde bestimmt ist, in welcher der mobile Teilnehmer die Identitätslokalisierungszone (Zkj) verlassen hat und in eine andere Identitätslokalisierungszone (ZKj) eingetreten ist.

*FIG. 1*

## FIG.2

| <DEkj-DSkj> Zkj — j = Lundi = 1 | <PCkj> Zkj — j = 2 | PCkj — j = 3 | PCkj — j = 4 | PCkj — j = 5 |
|---|---|---|---|---|
| <00:00, 07:45> Orsay | <00:00, 07:55> Orsay | <00:00, 07:50> Orsay | <00:00, 07:45> Orsay | <00:00, 07:55> Orsay |
| <07:45, 08:00> Massy | <07:55, 08:10> Massy | <07:50, 08:05> Massy | <07:45, 08:05> Massy | <07:55, 08:15> Massy |
| <08:00, 08:30> Denfert | <08:10, 08:40> Denfert | <08:05, 08:30> Denfert | <08:05, 08:40> Denfert | <08:15, 08:40> Denfert |
| <08:30, 18:30> Issy | <08:40, 18:20> Issy | <08:30, 08:45> Halles | <08:40, 18:15> Issy | <08:40, 09:00> Halles |
| <18:30, 18:45> Denfert | <18:20, 18:35> Denfert | <08:45, 17:50> Defense | <18:15, 19:00> Denfert | <09:00, 18:15> Defense |
| <18:45, 19:00> Massy | <18:35, 19:30> Massy | <17:50, 18:00> Halles | <19:00, 19:30> Massy | <18:15, 18:45> Halles |
| <19:00, 23:59> Orsay | <19:30, 23:59> Orsay | <18:00, 18:30> Denfert | <19:30, 23:59> Orsay | <18:45, 19:15> Denfert |
|  |  | <18:30, 18:50> Massy |  | <19:15, 19:40> Massy |
|  |  | <18:50, 23:59> Orsay |  | <19:40, 23:59> Orsay |

STAT

## FIG.5A

| j = Lundi = 1 | 3 = Mercredi = j | j = Vendredi = 5 |
|---|---|---|
| <08:40, 18:20> Nation | <08:45, 18:00> Nation | <08:50, 17:55> Nation  — MAJ |
| <PCkj> Zkj |  |  |

## FIG.5B

| PCo | (Z1, p1) |
|---|---|
| <08:40, 08:45> | (Nation, 0.2) |
| <08:45, 08:50> | (Nation, 0.4) |
| <08:50, 17:55> | (Nation, 0.6)  — L4 |
| <17:55, 18:00> | (Nation, 0.4) |
| <18:00, 18:20> | (Nation, 0.2) |

EP 0 624 996 B1

## FIG.3

```
┌────────────────────────────────────────────────────────┐
│  DSkjj, DSkjmin, k variables de 0ʰ00' à 23ʰ59'          │
│         j, jj variables de 1 à 5                        │
10─┤   j = jj = 1 = Lundi          k = 0ʰ00'             │
│         DSkjmin = 23ʰ59'                                │
└────────────────────────────────────────────────────────┘
```

$$DSkjj,\ DSkjmin,\ k\ \text{variables de } 0^h00'\ \text{à } 23^h59'$$
$$j,\ jj\ \text{variables de } 1\ \text{à } 5$$
$$j = jj = 1 = \text{Lundi} \qquad k = 0^h00'$$
$$DSkjmin = 23^h59'$$

non — Tant que $j \leqslant 5$ — 20
oui

non — Tant que $k < 23^h59'$ — 30
oui

Chercher parmi les dates de fin
des périodes du fichier STAT
la DSkjj telle que — 40

non — Tant que $jj \leqslant 5$ — 50
oui

Si DSkjj > k et DSkjj < DSkjmin
alors DSkjmin = DSkjj
Zkjmin = Zkjj

jj = jj + 1

Zkj = Zkjmin
DSkj = DSkjmin
PCo = < k, DSkj >      (Zkj, 0) — 60
k = DSkj        DSkjmin = 23ʰ59'

j = j + 1

L1

## FIG.4A

| L1 |
| --- |
| <00:00, 07:45> (Orsay, 0) |
| <07:45, 07:50> (Orsay, 0) |
| <07:50, 07:55> (Orsay, 0) |
| <07:55, 08:00> (Massy, 0) |
| <08:00, 08:05> (Massy, 0) |
| <08:05, 08:10> (Massy, 0) |
| <08:10, 08:15> (Massy, 0) |
| <08:15, 08:30> (Denfert, 0) |
| <08:30, 08:40> (Denfert, 0) |
| <08:40, 08:45> (Halles, 0) |
| <08:45, 09:00> (Halles, 0) |
| <09:00, 17:50> (Defense, 0) |
| <17:50, 18:00> (Halles, 0) |
| <18:00, 18:15> (Defense, 0) |
| <18:15, 18:30> (Denfert, 0) |
| <18:30, 18:35> (Denfert, 0) |
| <18:35, 18:45> (Denfert, 0) |
| <18:45, 18:50> (Massy, 0) |
| <18:50, 19:00> (Massy, 0) |
| <19:00, 19:15> (Denfert, 0) |
| <19:15, 19:30> (Massy, 0) |
| <19:30, 19:40> (Massy, 0) |
| <19:40, 23:59> (Orsay, 0) |
| <PCo > (Zo, r=0) |

## FIG.4B

| L2 |
| --- |
| <00:00, 07:45> (Orsay, 5) |
| <07:45, 07:50> (Orsay, 4)(Massy, 1) |
| <07:50, 07:55> (Orsay, 2)(Massy, 3) |
| <07:55, 08:00> (Massy, 5) |
| <08:00, 08:05> (Massy, 4)(Denfert, 1) |
| <08:05, 08:10> (Massy, 2)(Denfert, 3) |
| <08:10, 08:15> (Massy, 1)(Denfert, 4) |
| <08:15, 08:30> (Denfert, 5) |
| <08:30, 08:40> (Denfert, 3)(Issy,1)(Halles, 1) |
| <08:40, 08:45> (Halles, 2)(Issy, 3) |
| <08:45, 09:00> (Halles, 1)(Issy, 3)(Defense, 1) |
| <09:00, 17:50> (Defense, 2)(Issy, 3) |
| <17:50, 18:00> (Halles, 1)(Issy, 3)(Defense, 1) |
| <18:00, 18:15> (Defense, 1)(Issy, 3)(Denfert, 1) |
| <18:15, 18:30> (Denfert, 3)(Issy, 1)(Halles, 1) |
| <18:30, 18:35> (Denfert, 3)(Massy, 1)(Halles, 1) |
| <18:35, 18:45> (Denfert, 2)(Massy, 2)(Halles, 1) |
| <18:45, 18:50> (Massy, 3)(Denfert, 1)(Halles, 1) |
| <18:50, 19:00> (Massy, 2)(Orsay, 1)(Denfert, 2) |
| <19:00, 19:15> (Denfert, 1)(Orsay, 2)(Massy, 2) |
| <19:15, 19:30> (Massy, 3)(Orsay, 2) |
| <19:30, 19:40> (Massy, 1)(Orsay, 4) |
| <19:40, 23:59> (Orsay, 5) |
| <PCo> (Zr1, r1)(Zr2, r2) |

## FIG.4C

| L3 |
| --- |
| <00:00, 07:45> (Orsay, 1.0) |
| <07:45, 07:50> (Orsay, 0.8)(Massy, 0.2) |
| <07:50, 07:55> (Massy, 0.6)(Orsay, 0.4) |
| <07:55, 08:00> (Massy, 1.0) |
| <08:00, 08:05> (Massy, 0.8)(Denfert, 0.2) |
| <08:05, 08:10> (Denfert, 0.6)(Massy, 0.4) |
| <08:10, 08:15> (Denfert, 0.8)(Massy, 0.2) |
| <08:15, 08:30> (Denfert, 1.0) |
| <08:30, 08:40> (Denfert, 0.6)(Issy, 0.2)(Halles, 0.2) |
| <08:40, 08:45> (Issy, 0.6)(Halles, 0.4) |
| <08:45, 09:00> (Issy, 0.6)(Halles, 0.2)(Defense, 0.2) |
| <09:00, 17:50> (Issy, 0.6)(Defense, 0.4) |
| <17:50, 18:00> (Issy, 0.6)(Halles, 0.2)(Defense, 0.2) |
| <18:00, 18:15> (Issy, 0.6)(Defense, 0.2)(Denfert, 0.2) |
| <18:15, 18:30> (Denfert, 0.6)(Issy, 0.2)(Halles, 0.2) |
| <18:30, 18:35> (Denfert, 0.6)(Massy, 0.2)(Halles, 0.2) |
| <18:35, 18:45> (Denfert, 0.4)(Massy, 0.4)(Halles, 0.2) |
| <18:45, 18:50> (Massy, 0.6)(Denfert, 0.2)(Halles, 0.2) |
| <18:50, 19:00> (Massy, 0.4)(Denfert, 0.4)(Orsay, 0.2) |
| <19:00, 19:15> (Orsay, 0.4)(Massy, 0.4)(Denfert, 0.2) |
| <19:15, 19:30> (Massy, 0.6)(Orsay, 0.4) |
| <19:30, 19:40> (Orsay, 0.8)(Massy, 0.2) |
| <19:40, 23:59> (Orsay, 1.0) |
| <PCo> (Zr1, p1)(Zr2, p2) |

EP 0 624 996 B1

# FIG.6

RTC    HLR    VLR1    MCS1    BS    MS

IAM →

IAM, IMSI →

← MSRN

IAM, IMSI →

← (MCS1)

Page MS →    Paging Request →

Paging Request →

← Paging Failure

← MSRN

VLR2    MCS2    BS    MS

IAM, IMSI →    →    Paging Request →

← ← ←    Paging Response

EP 0 624 996 B1